# EUROPEAN PATENT APPLICATION

(11) **EP 4 261 242 A1**
(43) Date of publication of application: **18.10.2023**
(21) Application number: 21903406.3
(22) Date of filing: 07.12.2021
(51) Int. Cl.: C08G 65/10, C08G 65/336, C09J 11/06, C09J 11/08, C09J 171/02, C09K 3/10, C08L 71/02, C08G 18/71

(54) **OXYALKYLENE POLYMER, METHOD FOR PRODUCING SAME, CURABLE COMPOSITION AND CURED PRODUCT**

(30) Priority: 10.12.2020 JP 2020205019; 29.06.2021 JP 2021107746
(71) Applicant: AGC INC., Chiyoda-ku, Tokyo 1008405 (JP)
(72) Inventor: KONNO Kazuma, Tokyo 100-8405 (JP); ITO Takashi, Tokyo 100-8405 (JP); YAMASAKI Kosuke, Tokyo 100-8405 (JP); SUNAYAMA Yoshitaka, Tokyo 100-8405 (JP); TAKEDA Hajime, Tokyo 100-8405 (JP)
(74) Representative: Müller-Boré & Partner Patentanwälte PartG mbB
(86) International application number: PCT/JP2021/044949
(87) International publication number: WO 2022/124307

(57) **Abstract**

The present invention relates to an oxyalkylene polymer including: a polyoxyalkylene chain containing an oxyethylene group; and a reactive silicon group which is bonded to the polyoxyalkylene chain via an organic group containing one group represented by -C(=O)NH-, wherein a number average molecular weight is from 3,000 to 150,000, a molecular weight distribution is 2.00 or less, an amount of the oxyethylene group is from 3 to 90% by mass, and the number of the reactive silicon groups per molecule is 0.5 or more.

## Description

### [Technical Field]

The present invention relates to an oxyalkylene polymer having a reactive silicon group, a method for producing the oxyalkylene polymer, a curable composition containing the oxyalkylene polymer, and a cured product of the curable composition.

Priority is claimed on Japanese Patent Application No. 2020-205019, filed December 10, 2020 and Japanese Patent Application No. 2021-107746, filed June 29, 2021, the contents of which are incorporated herein by reference.

### [Background Art]

An oxyalkylene polymer having a reactive silicon group is cured by a hydrolysis reaction to form a flexible rubber-like cured product, which is used as a curing component for sealing materials, adhesives, and the like.

For these applications, it is required to have low viscosity, favorable workability, and favorable strength and elongation after curing. In addition, depending on the part to be coated, performance to sufficiently cure from the surface to the deep part by moisture in the air (deep-part curability) is required.

Patent Document 1 describes an example of producing an oxyalkylene polymer having a reactive silicon group, which is suitable for sealing materials and adhesives. More specifically, an example of producing a polymer by reacting a polyether polyol and a diisocyanate compound to form a urethane prepolymer having an isocyanate group at the terminal, and introducing a reactive silicon group into the obtained urethane prepolymer via a urea bond is described.

### [Citation List]

### [Patent Document]

[Patent Document 1] Japanese Unexamined Patent Application, First Publication No. 2001-31757

### [Summary of Invention]

### [Technical Problem]

However, an oxyalkylene polymer produced by the above method tends to have high viscosity.

The present invention provides: an oxyalkylene polymer which exhibits low viscosity and favorable deep-part curability and is capable of realizing a curable composition whose cured product exhibits favorable strength and elongation; a method for producing the oxyalkylene polymer; a curable composition containing the aforementioned oxyalkylene polymer; and a cured product thereof.

### [Solution to Problem]

The present invention includes the following aspects.
[1] An oxyalkylene polymer including: a polyoxyalkylene chain containing an oxyethylene group; and a reactive silicon group which is represented by the following formula (1) and bonded to the aforementioned polyoxyalkylene chain via an organic group containing one group represented by the following formula (i), wherein a number average molecular weight is from 3,000 to 150,000, a molecular weight distribution is 2.00 or less, an amount of the aforementioned oxyethylene group is from 3 to 90% by mass, and the number of the aforementioned reactive silicon groups per molecule is 0.5 or more.

   -C(=O)NH- (i)

   -SiXₐR₃₋ₐ (1)

   In the aforementioned formula (1), R is a monovalent organic group having 1 to 20 carbon atoms and represents an organic group other than a hydrolyzable group; X represents a hydroxyl group, a halogen atom, or a hydrolyzable group; a represents an integer of 1 to 3; when a is 1, R may be the same as or different from each other; and when a is 2 or 3, X may be the same as or different from each other.
[2] The oxyalkylene polymer according to [1], which does not contain a urea bond.
[3] A curable composition containing the oxyalkylene polymer according to [1] or [2] above.
[4] The curable composition according to [3], wherein an amount of the aforementioned oxyalkylene polymer is from 5 to 90% by mass with respect to a total mass of the curable composition.
[5] The curable composition according to [3] or [4], further including a plasticizer.
[6] The curable composition according to [5], wherein an amount of the aforementioned plasticizer is from 1 to 350 parts by mass with respect to 100 parts by mass of the aforementioned oxyalkylene polymer.
[7] The curable composition according to any one of [3] to [6], which is used for a sealing material or an adhesive.
[8] A cured product of the curable composition according to any one of [3] to [7] above.
[9] A method for producing an oxyalkylene polymer, the method including reacting a precursor polymer which has a polyoxyalkylene chain containing an oxyethylene group, and an active hydrogen-containing group bonded to the aforementioned polyoxyalkylene chain, and has a number average molecular weight of 3,000 to 150,000, a molecular weight distribution of 2.00 or less and an amount of the aforementioned oxyethylene group of 3 to 90% by mass, with a compound represented by the following formula (2), so that the number of reactive silicon groups represented by the following formula (1) per molecule is 0.5 or more, to obtain an oxyalkylene polymer.

   -SiXₐR₃₋ₐ (1)

   In the aforementioned formula (1), R is a monovalent organic group having 1 to 20 carbon atoms and represents an organic group other than a hydrolyzable group; X represents a hydroxyl group, a halogen atom, or a hydrolyzable group; a represents an integer of 1 to 3; when a is 1, R may be the same as or different from each other; and when a is 2 or 3, X may be the same as or different from each other.

   O=C=N-Q¹-SiXₐR₃₋ₐ (2)

   In the aforementioned formula (2), Q¹ is a divalent organic group having 1 to 20 carbon atoms, and R, X, and a are the same as those defined in the aforementioned formula (1).
[10] The production method according to [9], wherein a total degree of unsaturation of the aforementioned precursor polymer is 0.1 meq/g or less.
[11] The production method according to [9] or [10], wherein the aforementioned precursor polymer is produced by polymerizing a cyclic ether containing ethylene oxide with an initiator in the presence of a double metal cyanide complex.
[12] The production method according to [9] or [10], wherein the aforementioned precursor polymer is produced by polymerizing a cyclic ether with an initiator in the presence of a double metal cyanide complex, and further polymerizing ethylene oxide in the presence of an alkali metal hydroxide.

### [Advantageous Effects of Invention]

According to the present invention, an oxyalkylene polymer which exhibits low viscosity and favorable deep-part curability and is capable of realizing a curable composition whose cured product exhibits favorable strength and elongation; a method for producing the oxyalkylene polymer; a curable composition containing the aforementioned oxyalkylene polymer; and a cured product thereof can be obtained.

### [Description of Embodiments]

The meanings and definitions of the terms used in the present specification are as follows.

A numerical range represented by a symbol "-" means a numerical range in which numerical values before and after this symbol "-" are the lower limit and upper limit values.

A "polymer" means a substance with a number average molecular weight of 1,000 or more.

An "oxyalkylene polymer" means a polymer having a polyoxyalkylene chain formed from a unit based on a cyclic ether.

An "active hydrogen-containing group" refers to at least one group selected from the group consisting of a hydroxyl group bonded to a carbon atom, a carboxy group, an amino group, a monovalent functional group obtained by removing one hydrogen atom from a primary amine, and a sulfanyl group.

An "active hydrogen" refers to a hydrogen atom based on the aforementioned active hydrogen-containing group and a hydrogen atom based on the hydroxyl group of water.

An "initiator" is a compound having the above active hydrogen.

A number average molecular weight (hereinafter referred to as "Mn") and mass average molecular weight (hereinafter referred to as "Mw") of a polymer are polystyrene equivalent molecular weights obtained by GPC measurement. A molecular weight distribution is a value calculated from Mw and Mn, and is a ratio of Mw with respect to Mn (hereinafter referred to as "Mw/Mn").

A total degree of unsaturation of a polymer is a value measured using an iodine value titration method in accordance with JIS K1557-3:2007.

The amount of oxyethylene groups in the oxyalkylene polymer can be measured by ¹H-NMR.

The number of reactive silicon groups per polymer molecule can be measured by the ¹H-NMR internal standard method.

The number of groups represented by -C(=O)NH- (hereinafter also referred to as a "group (i)") per polymer molecule can be measured, for example, by the analytical method described in Japanese Unexamined Patent Application, First Publication No. 2000-227430 and Japanese Unexamined Patent Application, First Publication No. 2001-141726 using GPC, NMR or the like, after dissociating the urethane bond and the urea bond. The number of groups (i) per molecule can be calculated from the number of groups (i) obtained by this method and the number average molecular weight of the polymer.

### <<Oxyalkylene polymer>>

An oxyalkylene polymer of the present embodiment (hereinafter also referred to as a "polymer A") includes a polyoxyalkylene chain containing an oxyethylene group, and a reactive silicon group represented by the following formula (1) (hereinafter also simply referred to as a "reactive silicon group").

The reactive silicon group is bonded to the aforementioned polyoxyalkylene chain via an organic group (hereinafter also referred to as an "organic group A"). The organic group A contains one group (i) represented by the following formula (i).

-C(=O)NH- (i)

-SiXₐR₃₋ₐ (1)

In the formula (1), R represents a monovalent organic group having 1 to 20 carbon atoms. R does not contain a hydrolyzable group.

Examples of R include a hydrocarbon group, a halohydrocarbon group and a triorganosiloxy group.

R is preferably an alkyl group, a cycloalkyl group, an aryl group, a 1-chloroalkyl group and a triorganosiloxy group, and at least one group selected from the group consisting of a linear or branched alkyl group having 1 to 4 carbon atoms, a cyclohexyl group, a phenyl group, a benzyl group, a 1-chloromethyl group, a trimethylsiloxy group, a triethylsiloxy group and a triphenylsiloxy group is more preferred. A methyl group or an ethyl group is preferred from the viewpoint of favorable curability of the polymer having a reactive silicon group and favorable stability of the curable composition. A 1-chloromethyl group is preferred because a cured product has a high curing speed. A methyl group is particularly preferred because it is readily available.

In the formula (1), X represents a hydroxyl group, a halogen atom or a hydrolyzable group. A hydrolyzable group is a group that can react with water to form a silanol group.

Examples of the hydrolyzable group include an alkoxy group, an acyloxy group, a ketoximate group, an amino group, an amide group, an acid amide group, an aminooxy group, a sulfanyl group, and an alkenyloxy group.

X is preferably an alkoxy group because it is moderately hydrolyzable and easy to handle. The alkoxy group is preferably a methoxy group, an ethoxy group or an isopropoxy group, and more preferably a methoxy group or an ethoxy group. When the alkoxy group is a methoxy group or an ethoxy group, a siloxane bond is rapidly formed, a crosslinked structure is easily formed in a cured product, and the physical property values of the cured product are further improved.

In the formula (1), a represents an integer of 1 to 3. When a is 1, R may be the same as or different from each other. When a is 2 or more, X may be the same as or different from each other.
a is preferably 2 or 3, and a is more preferably 2.

Examples of the reactive silicon group represented by the formula (1) include a trimethoxysilyl group, a triethoxysilyl group, a triisopropoxysilyl group, a tris(2-propenyloxy)silyl group, a triacetoxysilyl group, a dimethoxymethylsilyl group, a diethoxymethylsilyl group, a dimethoxyethylsilyl group, a diisopropoxymethylsilyl group, a chloromethyldimethoxysilyl group, and a chloromethyldiethoxysilyl group. A trimethoxysilyl group, a triethoxysilyl group, a dimethoxymethylsilyl group and a diethoxymethylsilyl group are preferred, and a dimethoxymethylsilyl group and a trimethoxysilyl group are more preferred, from the viewpoint of obtaining high activity and favorable curability.

The number of reactive silicon groups per molecule of the polymer A is 0.5 or more, preferably from 0.8 to 8.0, more preferably from 1.0 to 6.0, and still more preferably from 1.2 to 4.0. When it is equal to or more than the lower limit value of the above range, the deep-part curability is excellent, and when it is equal to or less than the upper limit value, the elongation properties of the cured product are excellent.

The polyoxyalkylene chain is composed of a unit based on a cyclic ether.

Examples of the cyclic ether include alkylene oxides such as ethylene oxide, propylene oxide, 1,2-butylene oxide and 2,3-butylene oxide; and cyclic ethers other than alkylene oxides such as tetrahydrofuran. Alkylene oxides are preferred as the cyclic ether.

The polyoxyalkylene chain of the polymer A is a copolymer chain having a unit based on ethylene oxide (oxyethylene group) and another unit based on a cyclic ether other than ethylene oxide. The copolymer chain may be a block copolymer chain, a random copolymer chain, or a combination thereof.

The another unit is preferably a unit based on alkylene oxide (oxyalkylene group), and more preferably a unit based on propylene oxide (oxypropylene group).

As one aspect of the present invention, the polyoxyalkylene chain of the polymer A preferably contains only oxyethylene groups and oxypropylene groups.

The polyoxyalkylene chain of the polymer A is preferably, for example, a random copolymer chain containing an oxyethylene group and an oxypropylene group, a block copolymer chain having a block chain composed of an oxypropylene group and a block chain composed of an oxyethylene group, or a molecular chain having a random copolymer chain containing an oxyethylene group and an oxypropylene group and a block chain composed of an oxyethylene group.

The polyoxyalkylene chain of the polymer A preferably has an oxyethylene group present at least at the terminal on the side of the reactive silicon group. For example, when it has a block chain composed of an oxyethylene group, it is preferable that this block chain is present at least at the terminal of the polyoxyalkylene chain on the side of the reactive silicon group.

The amount of oxyethylene groups (hereinafter also referred to as "EO content") with respect to the total mass of the polymer A is from 3 to 90% by mass, preferably from 4 to 85% by mass, and more preferably from 6 to 80% by mass. When it is equal to or more than the lower limit value of the above range, the deep-part curability is excellent, and when it is equal to or less than the upper limit value, the viscosity is easily lowered.

In the polymer A, the organic group A present between the polyoxyalkylene chain and the reactive silicon group is an organic group derived from a compound 2 described later which is used for the purpose of introducing a reactive silicon group into an oxyalkylene polymer (precursor polymer) having no reactive silicon group. The organic group A contains one group (i) represented by the following formula (i).

-C(=O)NH- (i)

The group (i) is a divalent group derived from an isocyanate group contained in the compound 2. When the number of isocyanate groups contained in the compound 2 is one, the number of the groups (i) contained in the organic group A is one.

The group (i) preferably forms a urethane bond (-O-C(=O)NH-, -O- represents an oxygen atom at the terminal of the polyoxyalkylene chain) with a polyoxyalkylene chain. That is, in the polymer A, it is preferable that one urethane bond is present between the polyoxyalkylene chain and the reactive silicon group. The polymer A preferably does not contain a urea bond (-NH-C(=O)NH-).

When the compound 2 contains one isocyanate group and one reactive silicon group, respectively, the number of reactive silicon groups per molecule and the number of groups (i) per molecule of the polymer A are the same.

In the organic group A, a divalent organic group Q¹ is preferably interposed between the group (i) and the reactive silicon group. Q¹ is preferably a divalent hydrocarbon group, and more preferably an alkylene group having 1 to 20 carbon atoms. A preferred embodiment of the organic group Q¹ will be described in a formula (2) described later.

The Mn of the polymer A is from 3,000 to 150,000, preferably from 4,000 to 100,000, more preferably from 5,000 to 80,000, and still more preferably from 8,000 to 60,000. When it is equal to or more than the lower limit value of the above range, the elongation properties of the cured product are excellent, and when it is equal to or less than the upper limit value, the viscosity is easily lowered.

The Mw/Mn of the polymer A is 2.00 or less, preferably 1.50 or less, more preferably 1.45 or less, and still more preferably 1.40 or less. When it is equal to or less than the above upper limit value, the viscosity is easily lowered. In addition, the elongation properties of the cured product are easily improved. The lower limit value is not particularly limited. For example, it is 1.00 or more, and preferably 1.01 or more. The above lower limit value and upper limit value can be arbitrarily combined. For example, the Mw/Mn of the polymer A is preferably 1.00 or more and 2.00 or less, more preferably 1.00 or more and 1.50 or less, still more preferably 1.01 or more and 1.45 or less, and particularly preferably 1.01 or more and 1.40 or less.

The viscosity of the polymer A at 25°C is preferably from 0.1 to 50.0 Pa·s, more preferably from 0.3 to 40.0 Pa.s, still more preferably from 0.8 to 35.0 Pa.s, and most preferably from 1.0 to 25.0 Pa-s. When the viscosity is within the above range, the workability is further improved.

### <<Method for producing oxyalkylene polymer>>

The polymer A can be produced by a method of reacting a precursor polymer having a polyoxyalkylene chain containing an oxyethylene group, and an active hydrogen-containing group bonded to the aforementioned polyoxyalkylene chain (hereinafter also referred to as a "precursor polymer B") with a compound represented by the following formula (2) (hereinafter also referred to as a "compound 2").

The precursor polymer B can be produced by polymerizing an initiator and a cyclic ether containing ethylene oxide in the presence of a ring-opening polymerization catalyst.

The number of active hydrogens in the initiator is preferably from 1 to 8, more preferably from 1 to 6, and still more preferably from 2 to 4. It is preferable to select in accordance with the number of reactive silicon groups per molecule of the polymer A to be obtained.

One type of initiator may be used alone, or two or more types thereof may be used in combination.

The initiator preferably has a hydroxyl group as an active hydrogen-containing group.

Examples of the initiator having two hydroxyl groups include ethylene glycol, diethylene glycol, propylene glycol, dipropylene glycol, triethylene glycol, tripropylene glycol, neopentyl glycol, 1,4-butanediol, 1,6-hexanediol, and low molecular weight polyoxypropylene glycols.

Examples of the initiator having three hydroxyl groups include glycerin, trimethylolpropane, trimethylolethane, and low molecular weight polyoxypropylene triols.

Examples of the initiator having four or more hydroxyl groups include pentaerythritol, sucrose, sorbitol, dipentaerythritol, trehalose and diglycerin.

The cyclic ether is selected in accordance with structural units of the polyoxyalkylene chains of the precursor polymer B and polymer A to be obtained. The cyclic ether at least includes ethylene oxide.

The amount of oxyethylene groups with respect to the total mass of the precursor polymer B is from 3 to 90% by mass, preferably from 4 to 85% by mass, and more preferably from 6 to 80% by mass.

Units other than oxyethylene groups are preferably oxyalkylene groups, and more preferably oxypropylene groups.

As one aspect of the present invention, the polyoxyalkylene chain of the precursor polymer B preferably contains only oxyethylene groups and oxypropylene groups.

Examples of the ring-opening polymerization catalyst include a double metal cyanide complex and an alkali metal hydroxide (potassium hydroxide or the like).

A double metal cyanide complex is preferably used because the molecular weight distribution of the precursor polymer B tends to be small and the total degree of unsaturation of the precursor polymer B tends to be small.

A conventionally known compound can be used as the double metal cyanide complex. For example, compounds and production methods disclosed in International Patent Publication No. 2003/062301, International Patent Publication No. 2004/067633, Japanese Unexamined Patent Application, First Publication No. 2004-269776, Japanese Unexamined Patent Application, First Publication No. 2005-15786, International Patent Publication No. 2013/065802 and Japanese Unexamined Patent Application, First Publication No. 2015-010162 can be used.

The double metal cyanide complex is preferably a double metal cyanide complex in which glyme or t-butyl alcohol as an organic ligand is coordinated to the catalyst skeleton. The catalyst skeleton is more preferably Zn₃[Co(CN)₆]₂ (that is, a zinc hexacyanocobaltate complex). In particular, a double metal cyanide complex using t-butyl alcohol as an organic ligand is preferred.

When the polyoxyalkylene chains of the precursor polymer B and polymer A to be obtained are random copolymer chains, a method of producing the precursor polymer B by polymerizing a cyclic ether containing ethylene oxide with an initiator in the presence of a double metal cyanide complex is preferred.

For example, a method of obtaining the precursor polymer B by reacting a mixture of ethylene oxide and propylene oxide with an initiator in the presence of a double metal cyanide complex is preferred.

When the polyoxyalkylene chains of the precursor polymer B and polymer A to be obtained have a block chain or random copolymer chain composed of an oxyalkylene group other than an oxyethylene group and a block chain composed of an oxyethylene group, a method of producing the precursor polymer B by polymerizing a cyclic ether with an initiator in the presence of a double metal cyanide complex and further polymerizing ethylene oxide in the presence of an alkali metal hydroxide is preferred.

For example, a method of obtaining the precursor polymer B by polymerizing propylene oxide with an initiator in the presence of a double metal cyanide complex and then polymerizing ethylene oxide in the presence of an alkali metal hydroxide is preferred.

Alternatively, a method of obtaining the precursor polymer B by reacting a mixture of ethylene oxide and propylene oxide with an initiator in the presence of a double metal cyanide complex and then polymerizing ethylene oxide in the presence of an alkali metal hydroxide is preferred.

In the precursor polymer B, the presence of an oxyethylene group at least at the terminal of the polyoxyalkylene chain on the side of the reactive silicon group is preferred in view of further improving the deep-part curability.

The Mn of the precursor polymer B is from 3,000 to 150,000, preferably from 4,000 to 100,000, more preferably from 5,000 to 80,000, and still more preferably from 8,000 to 60,000. It is preferable to set in accordance with the Mn of the polymer A to be obtained.

The Mw/Mn of the precursor polymer B is preferably set so that the Mw/Mn of the polymer A is 2.00 or less. For example, the Mw/Mn of the precursor polymer B is preferably 1.50 or less, more preferably 1.45 or less, and still more preferably 1.40 or less. The lower limit value is not particularly limited. For example, it is 1.00 or more, and preferably 1.01 or more. The above lower limit value and upper limit value can be arbitrarily combined. For example, the Mw/Mn of the precursor polymer B is preferably 1.00 or more and 2.00 or less, more preferably 1.00 or more and 1.50 or less, still more preferably 1.01 or more and 1.45 or less, and particularly preferably 1.01 or more and 1.40 or less.

The total degree of unsaturation of the precursor polymer B is preferably 0.1 meq/g or less, more preferably 0.05 meq/g or less, still more preferably 0.03 meq/g or less, and most preferably 0.01 meq/g or less. When it is equal to or less than the above upper limit value, the deep-part curability is excellent. The lower limit value is not particularly limited. For example, it is preferably 0.0001 meq/g or more. The total degree of unsaturation of the precursor polymer B is preferably from 0.0001 to 0.1 meq/g, more preferably from 0.0001 to 0.05 meq/g, still more preferably from 0.0001 to 0.03 meq/g, and most preferably from 0.0001 to 0.01 meq/g.

The compound 2 to be reacted with the precursor polymer B is represented by the following formula (2).

O=C=N-Q¹-SiXₐR₃₋ₐ (2)

In the formula (2), R, X, and a are the same as R, X, and a defined in the formula (1), including preferred embodiments thereof.

Q¹ is a divalent organic group having 1 to 20 carbon atoms. Q¹ is preferably a divalent hydrocarbon group, and more preferably an alkylene group. Q¹ preferably has 1 to 18 carbon atoms, more preferably 1 to 12 carbon atoms, and still more preferably 1 to 8 carbon atoms.

Examples of the compound 2 include isocyanatomethyltrimethoxysilane, isocyanatomethyltriethoxysilane, isocyanatomethylmethyldimethoxysilane, 1-isocyanatopropylmethyldimethoxysilane, 3-isocyanatopropyltrimethoxysilane, 3-isocyanatopropylmethyldimethoxysilane and 3-isocyanatopropyltriethoxysilane.

3-isocyanatopropyltrimethoxysilane, 3-isocyanatopropylmethyldimethoxysilane, 1-isocyanatopropylmethyldimethoxysilane, and 3-isocyanatopropyltriethoxysilane are preferred from the viewpoint of further improving the deep-part curability in the cured product of the curable composition.

A reactive silicon group is introduced into the precursor polymer B by reacting the active hydrogen of the precursor polymer B with the isocyanate group of the compound 2.

When the active hydrogen-containing group of the precursor polymer B is a hydroxyl group, a polymer A in which a reactive silicon group is bonded to a polyoxyalkylene chain (-(R¹O)ₙ-, R¹ represents an alkylene group, and n represents the number of moles of an oxyalkylene group) via a urethane bond and an organic group (-Q¹-) is obtained. That is, a linked structure represented by -(R¹O)ₙ-C(=O)NH-Q¹-SiXₐR₃₋ₐ is formed.

The reaction between the precursor polymer B and the compound 2 can be carried out by a known method. When the active hydrogen-containing group of the precursor polymer B is a hydroxyl group, a known urethanization catalyst may be used in the reaction between the precursor polymer B and the compound 2 (urethanization reaction). Examples of the urethanization catalyst include organic tin compounds, bismuth compounds, organic metal alkoxides, complexes containing metals other than tin, organic amines, and double metal cyanide complex catalysts having organic ligands. Dibutyltin diacetate, dibutyltin dilaurate, dioctyltin dilaurate, dioctyltin bisisooctylthioglycol, and bismuth octoate are preferred as the urethanization catalysts.

A molar ratio of the total number of isocyanate groups of the compound 2 with respect to the total number of active hydrogens of the precursor polymer B is preferably set in accordance with the number of reactive silicon groups per molecule of the polymer A to be obtained. The compound 2 is reacted so that the number of reactive silicon groups per molecule of the polymer A to be obtained is at least 0.5 or more.

For example, when the active hydrogen-containing group of the precursor polymer B is a hydroxyl group, NCO/OH representing the molar ratio of the total number of isocyanate groups (NCO) of the compound 2 with respect to the total number of active hydrogens of the precursor polymer B is preferably from 0.5 to 1.2, more preferably from 0.6 to 1.1, and still more preferably from 0.8 to 1.0. When it is equal to or more than the lower limit value of the above range, the strength of the cured product is excellent, and when it is equal to or less than the upper limit value, the elongation of the cured product is excellent.

It is preferable to use a method for reacting the precursor polymer B and the compound 2 as a method for producing the polymer A from the viewpoint of not producing impurities having unsaturated groups as by-products. Moreover, it is also preferable in that the number of manufacturing processes is small. The total degree of unsaturation of the polymer A obtained by this method is equal to or less than the total degree of unsaturation of the precursor polymer B. More specifically, the total degree of unsaturation of the polymer A is preferably 0.1 meq/g or less, more preferably 0.05 meq/g or less, still more preferably 0.03 meq/g or less, and most preferably 0.01 meq/g or less. When it is equal to or less than the above upper limit value, the strength of the cured product is further improved. The lower limit value is not particularly limited. For example, it is preferably 0.0001 meq/g or more. The total degree of unsaturation of the polymer A is preferably from 0.0001 to 0.1 meq/g, more preferably from 0.0001 to 0.05 meq/g, still more preferably from 0.0001 to 0.03 meq/g, and most preferably from 0.0001 to 0.01 meq/g.

### <<Curable composition/cured product>>

A curable composition of the present embodiment contains the polymer A. It is preferable to further contain one or more plasticizers.

The number of types of the polymers A contained in the curable composition may be one, or two or more. When two or more types of polymers A are used, preferred ranges of the Mn, EO content, number of reactive silicon groups per molecule, Mw/Mn, and viscosity of the polymers A are the preferred ranges of each polymer. The amount of the polymer A with respect to the total mass of the curable composition is preferably from 5 to 90% by mass, more preferably from 10 to 60% by mass, and still more preferably from 15 to 50% by mass. When it is equal to or more than the lower limit value of the above range, the modulus of the cured product of the curable composition tends to be in a favorable range, and when it is equal to or less than the upper limit value, the elongation of the cured product of the curable composition tends to be favorable.

A polymer (Mn of 1,000 or more) that does not have a reactive silicon group may be included as a plasticizer. Examples thereof include a (meth)acrylate polymer and an oxyalkylene polymer. Examples of the (meth)acrylate polymer include polymers or copolymers of monomers containing (meth)acrylates such as methyl (meth)acrylate, butyl (meth)acrylate, 2-ethylhexyl (meth)acrylate, lauryl (meth)acrylate and stearyl (meth)acrylate. The term "(meth)acrylate" means one or both of an acrylate and a methacrylate. Examples of commercially available (meth)acrylate polymers include ARUFON (registered trademark) UP-1000, ARUFON UP-1110, and ARUFON UP-1171 (all manufactured by Toagosei Co., Ltd.). ARUFON (registered trademark) UP-1171 is preferred as the (meth)acrylate polymer.

Examples of the oxyalkylene polymers to be used as plasticizers include polyoxyalkylene polyols and derivatives of these polyoxyalkylene polyols in which hydroxyl groups are converted into esters or ethers.

These polyoxyalkylene polyols have a polyoxyalkylene chain and a hydroxyl group. For example, the precursor polymer B can be used as the polyoxyalkylene polyol. The number of hydroxyl groups in one molecule of the polyoxyalkylene polyol is preferably 2 or 3. The polyoxyalkylene chain of the polyoxyalkylene polyol preferably contains an oxyethylene group, and more preferably contains an oxyethylene group and an oxypropylene group. When the polyoxyalkylene chain contains an oxyethylene group and an oxypropylene group, it may be a random copolymer chain, a block copolymer chain, or a combination thereof.

The amount of oxyethylene groups is preferably from 3 to 90% by mass, more preferably from 4 to 85% by mass, and still more preferably from 6 to 80% by mass with respect to the total mass of the oxyalkylene polymer to be used as the plasticizer.

The Mn of the oxyalkylene polymer to be used as the plasticizer is preferably from 3,000 to 150,000, more preferably from 4,000 to 100,000, still more preferably from 5,000 to 80,000, and most preferably from 8,000 to 60,000.

A commercially available oxyalkylene polymer may be used as the plasticizer. Examples thereof include Preminol (registered trademark) S3011, Preminol S4012, and Preminol S4013F (all manufactured by AGC Inc.).

As a plasticizer, one or more plasticizers having a low molecular weight (Mn or formula weight of less than 1,000) may be included. Examples of the low molecular weight plasticizers include phthalate compounds such as dioctyl phthalate, dibutyl phthalate, butyl benzyl phthalate, and diisononyl phthalate; aliphatic carboxylic acid ester compounds such as dioctyl adipate, diisodecyl succinate, dibutyl sebacate, butyl oleate, and 1,2-cyclohexane dicarboxylic acid-diisononyl esters; alcohol ester compounds such as pentaerythritol esters; phosphate ester compounds such as trioctyl phosphate and tricresyl phosphate; epoxy plasticizers such as epoxidized soybean oil, dioctyl 4,5-epoxyhexahydrophthalate and benzyl epoxystearate; chlorinated paraffins; and polyester plasticizers such as polyesters obtained by reacting a dibasic acid with a dihydric alcohol.

As the low molecular weight plasticizer, phthalate compounds such as diisononyl phthalate and aliphatic carboxylic acid ester compounds such as 1,2-cyclohexane dicarboxylic acid-diisononyl esters are preferred.

When the curable composition contains a plasticizer, the amount of the plasticizer is preferably from 1 to 350 parts by mass, more preferably from 2 to 300 parts by mass, still more preferably from 3 to 200 parts by mass, and particularly preferably from 5 to 120 parts by mass with respect to 100 parts by mass of the polymer A. When it is equal to or more than the lower limit value of the above range, the viscosity of the curable composition will be lower and the workability will be better, and when it is equal to or less than the upper limit value, bleeding out is less likely to occur in the cured product of the curable composition.

The curable composition may contain one or more other components that are neither the polymer A nor the plasticizer.

Examples of these other components include additives in accordance with the application of the curable composition, and fillers, thixotropic agents, antioxidants, ultraviolet absorbers, light stabilizers, dehydrating agents, adhesion-imparting agents, amine compounds, modulus modifiers, oxygen-curable compounds, photocurable compounds, and curing catalysts. Conventionally known components described in International Patent Publication No. 2013/180203, International Patent Publication No. 2014/192842, International Patent Publication No. 2016/002907, Japanese Unexamined Patent Application, First Publication No. 2014-88481, Japanese Unexamined Patent Application, First Publication No. 2015-10162, Japanese Unexamined Patent Application, First Publication No. 2015-105293, Japanese Unexamined Patent Application, First Publication No. 2017-039728, Japanese Unexamined Patent Application, First Publication No. 2017-214541 and the like can be used in combination without limitation as these other components.

The curable composition is obtained by adding and mixing necessary components to the polymer A.

The curable composition may be a one-component type in which all the ingredients are mixed in advance, sealed and stored, and then cured by moisture in the air after application.

Alternatively, it may be a two-component type in which a main agent composition containing at least a component having a reactive silicon group and a curing agent composition containing at least a curing catalyst are stored separately, and the curing agent composition and the main agent composition are mixed and cured before use.

It is preferable that the one-component type curable composition does not contain water. It is preferable to preliminarily dehydrate and dry the ingredients containing water, or to dehydrate them by reducing the pressure during the mixing and kneading process.

In a two-component type curable composition, the curing agent composition may contain water. Although the main agent composition hardly gels even when it contains a small amount of water, it is preferable to dehydrate and dry the ingredients in advance from the viewpoint of storage stability.

A dehydrating agent may be added to the one-component type curable composition or the two-component type main agent composition in order to improve the storage stability.

As applications of the curable composition, sealing materials (for example, elastomeric sealing materials for construction, sealing materials for double glazing, sealing materials for rust prevention and waterproofing of glass edges, sealing materials for back surfaces of solar cells, building sealants, marine sealants, automobile sealants, and road sealants), electrical insulating materials (insulating coating materials for electric wires and cables), adhesives, and potting materials are suitable.

The curable composition of the present embodiment is excellent in deep-part curability. For example, in a deep-part curing test described in Examples below, deep-part curability can be achieved such that the thickness of a cured portion after 3 days is 7 mm or more and the thickness of the cured portion after 7 days is 12 mm or more, and preferably, deep-part curability can be achieved such that the thickness of the cured portion after 3 days is 8 mm or more and the thickness of the cured portion after 7 days is 13 mm or more. The upper limit value is not particularly limited. 55 mm is exemplified as the upper limit value of the thickness of the cured portion after 3 days. 55 mm is exemplified as the upper limit value of the thickness of the cured portion after 7 days. It is preferable that the thickness of the cured portion after 3 days is from 7 to 55 mm and the thickness of the cured portion after 7 days is from 12 to 55 mm, and it is more preferable that the thickness of the cured portion after 3 days is from 8 to 55 mm and the thickness of the cured portion after 7 days is from 13 to 55 mm.

The curable composition of the present embodiment tends to have a low viscosity and can easily obtain favorable workability. For example, it is possible to achieve a viscosity of the curable composition at 25°C from 0.1 to 1,000 Pa-s, preferably from 1.0 to 500 Pa- s, and more preferably from 1.0 to 200 Pa·s. When the viscosity is within the above range, it is excellent in workability when used for, for example, a sealant material or an adhesive.

The cured product of the curable composition of the present embodiment is excellent in strength. For example, it is possible to achieve a maximum cohesive strength (Tmax) of 0.50 N/mm² or more, and preferably 1.00 N/mm² or more, in a tensile test described in Examples below. When the maximum cohesive strength is within the above range, for example, the strength as a sealant material or adhesive is excellent. The upper limit value is not particularly limited. 5.00 N/mm² is exemplified as the upper limit value. Tmax is preferably from 0.50 to 5.00 N/mm², and more preferably from 1.00 to 5.00 N/mm².

The cured product of the curable composition of the present embodiment has excellent elongation properties. For example, it is possible to achieve a maximum elongation (E) of 50% or more, and preferably 60% or more, in a tensile test described in Examples below. When the maximum elongation is equal to or more than the above lower limit value, for example, the elongation properties as a sealant material or adhesive are excellent. The upper limit value is not particularly limited. 300% is exemplified as the upper limit value. E is preferably from 50 to 300%, and more preferably from 60 to 300%.

### [Examples]

The present invention will be described in more detail below using Examples, but the present invention is not limited to these Examples.

### <Measurement method>

### [Mn and Mw/Mn of polymer]

Mw, Mn and Mw/Mn were obtained by using HLC-8220GPC (product name of Tosoh Corporation), TSKgel Supermultipore HZ-M columns (product name of Tosoh Corporation) and tetrahydrofuran as a solvent, setting the sample pump to 0.350 mL/min, the reference pump to 0.350 mL/min, the detector temperature to 40°C and the collection time to 6 to 15 minutes, and analyzing the peaks appearing between collection times of 6 and 11 minutes.

### [Number of hydroxyl groups of precursor polymer]

The number of hydroxyl groups in one molecule of the precursor polymer was measured by a titration method using a sodium hydroxide (NaOH) solution by esterifying the hydroxyl groups with a pyridine solution of phthalic anhydride (in accordance with JIS K1557:2007).

### [Viscosity]

The viscosity of an oxyalkylene polymer A was measured at a measurement temperature of 25°C using an E-type viscometer ("VISCOMETER TV-22" (product name) manufactured by Toki Sangyo Co., Ltd.).

The viscosity of a curable composition was measured at a measurement temperature of 25°C after rotation at 10 rpm for 1 minute using a B-type viscometer ("VISCOMETER TV-25H" (product name) manufactured by Toki Sangyo Co., Ltd.).

### [Other measurements]

The total degree of unsaturation of the precursor polymer B, the amount of oxyethylene groups in the polymer, and the number of reactive silicon groups per molecule of the polymer A and the number of groups represented by -C(=O)NH- were measured by the methods described above.

### <Evaluation method>

### [Deep-part curing test]

In an atmosphere at a temperature of 23°C and a relative humidity of 50%, a curable composition to be measured was filled into a polyethylene tube having a diameter of 24 mm and a height of 55 mm so as not to contain bubbles. The curable composition protruding from the open end of the tube was scraped off with a spatula to flatten the surface, thereby obtaining a test specimen. The obtained test specimen was allowed to stand in the above atmosphere so that the surface of the curable composition was horizontal, and the degree of curing inward from the surface of the curable composition was examined after 1 day, 3 days, and 7 days. More specifically, a surface layer obtained by curing the curable composition (cured portion) was peeled off, an uncured portion was removed, and the thickness (unit: mm) of the cured portion was measured using a vernier caliper. The larger the thickness of the cured portion, the superior the deep-part curability.

### [Tensile test (M50, Tmax, E)]

The curable composition to be measured was filled into a mold having a thickness of 2 mm, cured for 7 days in an atmosphere at a temperature of 23°C and a relative humidity of 50%, and further cured for 7 days in an atmosphere at a temperature of 50°C and a relative humidity of 65%. The obtained cured product was punched out with a dumbbell mold to obtain a test piece.

A tensile test was carried out on the obtained test piece at a tensile rate of 500 mm/min, and tensile properties including the stress (M50, unit: N/mm²) when stretched by 50%, the maximum cohesive strength (Tmax, unit: N/mm²) and the maximum elongation (E, unit: %) were measured.

### (Production Example 1: production of precursor polymer B1)

A slurry containing a zinc hexacyanocobaltate-glyme complex (hereinafter referred to as "Gly-DMC catalyst") and a polyoxypropylene triol having an Mn of 3,000 (hereinafter referred to as "initiator A") obtained by polymerizing a propylene oxide (hereinafter also referred to as "PO") using glycerin as an initiator were added into a pressure-resistant reactor equipped with a stirrer and a nitrogen inlet tube to form a reaction solution. The amount of the slurry added was such that the metal concentration of the Gly-DMC catalyst in the reaction solution was 46 mass ppm.

Subsequently, after replacing the air inside the pressure-resistant reactor with nitrogen, the reaction solution was heated while being stirred, and PO was supplied into the pressure-resistant reactor and allowed to react at 135°C so as to achieve the desired molecular weight.

Then, after confirming that the temperature of the reaction solution had stopped rising, it was cooled to 120°C. Next, 48% by mass of a KOH catalyst was added so that the active ingredient concentration with respect to the obtained reaction solution was 0.3% by mass, followed by dehydration and alcoholation, and then ethylene oxide (hereinafter also referred to as "EO") was supplied into the pressure-resistant reactor and reacted so that the desired content was achieved.

After confirming that the internal pressure had stopped changing and the reaction had ended, the catalyst was neutralized and removed using a synthetic adsorbent (Kyowaad 600S, manufactured by Kyowa Chemical Industry Co., Ltd.) to obtain a precursor polymer B1. The number of hydroxyl groups per molecule, Mn, Mw/Mn, EO content, and total degree of unsaturation of the obtained precursor polymer are shown in Table 1 (hereinafter the same applies).

### (Production Example 2: production of precursor polymer B2)

A slurry containing a zinc hexacyanocobaltate-tert-butyl alcohol complex (hereinafter referred to as "TBA-DMC catalyst") and the initiator A were charged into the same pressure-resistant reactor as in Production Example 1 to form a reaction solution. The amount of the slurry charged was such that the metal concentration of the TBA-DMC catalyst was 46 mass ppm.

Subsequently, after replacing the air inside the pressure-resistant reactor with nitrogen, the reaction solution was heated while being stirred, and a mixture of PO and EO was supplied into the pressure-resistant reactor and allowed to react at 135°C so as to achieve the desired molecular weight, thereby obtaining a precursor polymer B2 (PO/EO mass ratio was 80/20).

### (Production Example 3: production of precursor polymer B3)

A precursor polymer B3 was obtained in the same manner as in Production Example 2 with the exception that the initiator A in Production Example 2 was changed to a polyoxyethyleneoxypropylene triol having an Mn of 3,400 obtained by polymerizing a mixture having a PO/EO mass ratio of 35/65 using glycerin as an initiator, and the PO/EO ratio of the mixture of PO and EO was changed so that the PO/EO mass ratio of the obtained precursor polymer was 35/65.

### (Production Example 4: production of precursor polymer B4)

A precursor polymer B4 was obtained in the same manner as in Production Example 2 with the exception that the initiator A in Production Example 2 was changed to a polyoxyethyleneoxypropylene triol having an Mn of 3,400 obtained by polymerizing a mixture having a PO/EO mass ratio of 20/80 using glycerin as an initiator, and the PO/EO ratio of the mixture of PO and EO was changed so that the PO/EO mass ratio of the obtained precursor polymer was 20/80.

### (Production Example 5: production of precursor polymer B5)

A precursor polymer B5 was obtained in the same manner as in Production Example 2 with the exception that the initiator A in Production Example 2 was changed to a polyoxypropylene diol having an Mn of 3,000 obtained by polymerizing PO using dipropylene glycol as an initiator.

### (Production Example 6: production of precursor polymer B6)

A precursor polymer B6 was obtained in the same manner as in Production Example 2 with the exception that the target Mn in Production Example 2 was changed.

### (Production Example 7: production of precursor polymer B7)

A precursor polymer B7 was obtained in the same manner as in Production Example 1 with the exception that the target molecular weight in Production Example 1 was changed, and the amount of PO supplied and amount of EO supplied were changed so that the PO/EO mass ratio of the obtained precursor polymer was 80/20.

### (Production Example 8: production of precursor polymer B8)

A precursor polymer B8 was obtained in the same manner as in Production Example 1 with the exception that the target molecular weight in Production Example 1 was changed, and the amount of PO supplied and amount of EO supplied were changed so that the PO/EO mass ratio of the obtained precursor polymer was 80/20.

### (Production Example 9: production of precursor polymer B'9 (Comparative Example))

A precursor polymer B'9 was obtained in the same manner as in Production Example 2 with the exception that the initiator A in Production Example 2 was changed to a polyoxypropylene triol having an Mn of 1,000 obtained by polymerizing PO using glycerin as an initiator, and PO was supplied into the pressure-resistant reactor instead of the mixture of PO and EO and allowed to react so as to achieve the desired molecular weight.

### (Production Example 10: production of precursor polymer B'10 (Comparative Example))

A precursor polymer B'10 was obtained in the same manner as in Production Example 2 with the exception that the initiator A in Production Example 2 was changed to a polyoxyethylene triol having an Mn of 3,000 obtained by polymerizing EO using glycerin as an initiator, and EO was supplied into the pressure-resistant reactor instead of the mixture of PO and EO and allowed to react so as to achieve the desired molecular weight.

### (Production Example 11: production of precursor polymer B'11 (Comparative Example))

A precursor polymer B'11 was obtained in the same manner as in Production Example 2 with the exception that the target molecular weight in Production Example 2 was changed.

### (Production Example 12: production of precursor polymer B12)

A precursor polymer B12 was obtained in the same manner as in Production Example 2 with the exception that the initiator A in Production Example 2 was changed to a polyoxypropylene polyol having a molecular weight of 1,000 obtained by polymerizing PO using sorbitol as an initiator, the target molecular weight was changed, and the PO/EO ratio of the mixture of PO and EO was changed so that the PO/EO mass ratio of the obtained precursor polymer was 95/5.

**[Table 1]**

| Production Example | Precursor polymer B | Number of hydroxyl groups in one molecule | Mn | Mw/Mn | EO content | Total degree of unsaturation |
|---|---|---|---|---|---|---|
| | | | | | [% by mass] | [meq/g] |
| 1 | B1 | 3 | 13,000 | 1.30 | 12 | 0.03 |
| 2 | B2 | 3 | 13,000 | 1.17 | 20 | 0.01 |
| 3 | B3 | 3 | 13,000 | 1.16 | 65 | 0.01 |
| 4 | B4 | 3 | 13,000 | 1.16 | 80 | 0.01 |
| 5 | B5 | 2 | 14,000 | 1.14 | 20 | 0.01 |
| 6 | B6 | 3 | 23,000 | 1.18 | 20 | 0.01 |
| 7 | B7 | 3 | 8,000 | 1.17 | 20 | 0.03 |
| 8 | B8 | 3 | 6,200 | 1.17 | 20 | 0.03 |
| 9 | B'9 | 3 | 13,000 | 1.24 | 0 | 0.01 |
| 10 | B'10 | 3 | 13,000 | 1.17 | 100 | 0.01 |
| 11 | B'11 | 3 | 2,200 | 1.10 | 20 | 0.01 |
| 12 | B12 | 6 | 57,720 | 1.17 | 5 | 0.01 |

### (Example 1: production of polymer A1)

The air inside the reactor containing the precursor polymer B1 was replaced with nitrogen gas, 3-isocyanatopropyltrimethoxysilane was added so that a ratio of NCO/OH (molar ratio) was 0.97 while maintaining the internal temperature at 50°C, and dioctyltin bisisooctylthioglycol (Neostann U-860: product name of Nitto Kasei Co., Ltd.) was added as a catalyst. Then, the temperature was raised to 80°C, and the resulting mixture was stirred while the temperature was kept at 80°C. Analysis was performed using a Fourier transform infrared spectrophotometer, and the reaction was allowed to proceed until completion of the reaction between the hydroxy group and the isocyanate group could be confirmed to obtain a polymer A1. 0.06 parts by mass of 3-mercaptopropyltrimethoxysilane (KBM-803: product name of Shin-Etsu Chemical Co., Ltd.) as a storage stabilizer was added with respect to 100 parts by mass of the precursor polymer B1 to obtain a mixture containing the polymer A1.

The number of reactive silicon groups per molecule, number of groups i (-C(=O)NH-) per molecule, Mn, Mw/Mn, EO content, and viscosity of the obtained polymer A1 are shown in Table 2 (hereinafter the same applies).

### (Example 1-1: production of curable composition)

A curable composition was produced by mixing 100 parts by mass of a mixture containing the polymer A1 and an additive 1 shown in Table 3. The compositions shown in Table 3 are values (unit: parts by mass) with respect to 100 parts by mass of the mixture containing the polymer A (hereinafter the same applies).

The viscosity of the obtained curable composition, the results of the deep-part curing test, and the measurement results of M50, Tmax and E of the cured product are shown in Table 4 (hereinafter the same applies).

### (Example 1-2: production of curable composition)

A curable composition was produced in the same manner as in Example 1-1 with the exception that the additive 1 in Example 1-1 was changed to an additive 8.

### (Example 2: production of polymer A2-1 and curable composition)

A mixture containing a polymer A2-1 and a curable composition were produced in the same manner as in Example 1 with the exception that the precursor polymer B1 in Example 1 was changed to the precursor polymer B2 having the same mass.

### (Example 3: production of polymer A2-2 and curable composition)

A mixture containing a polymer A2-2 was obtained in the same manner as in Example 2 with the exception that 3-isocyanatopropyltrimethoxysilane in Example 2 was changed to 3-isocyanatopropylmethyldimethoxysilane.

A curable composition was produced by mixing 100 parts by mass of the mixture containing the polymer A2-2 and an additive 2 shown in Table 3.

### (Example 4: production of polymer A2-3 and curable composition)

A mixture containing a polymer A2-3 was obtained in the same manner as in Example 2 with the exception that 3-isocyanatopropyltrimethoxysilane in Example 2 was changed to 1-isocyanatopropylmethyldimethoxysilane.

A curable composition was produced by mixing 100 parts by mass of the mixture containing the polymer A2-3 and the additive 1 shown in Table 3.

### (Examples 5 to 9: production of polymers A3 to A7 and curable compositions)

Mixtures containing any one of polymers A3 to A7 were obtained in the same manner as in Example 1 with the exception that the precursor polymer B1 in Example 1 was changed to any one of the precursor polymers B3 to B7 having the same mass.

Curable compositions were produced by mixing 100 parts by mass of the respective mixture containing any one of the polymers A3 to A7 and the additive 1 shown in Table 3, respectively.

### (Example 10: production of polymer A'1 (Comparative Example) and curable composition)

In this example, a comparative polymer in which a reactive silyl group was bonded to a polyoxyalkylene chain via a urethane bond and a urea bond was produced.

TDI used in this example is tolylene diisocyanate, and "TDI-80" is a mixture of 2,4-TDI/2,6-TDI = 80/20 (mass ratio) (product name, manufactured by Nippon Polyurethane Industry Co., Ltd.).

2EHA is 2-ethylhexyl acrylate, and KBM602 (product name, manufactured by Shin-Etsu Chemical Co., Ltd.) is N-(2-aminoethyl)-3-aminopropylmethyldimethoxysilane.

First, the precursor polymer B1 was charged into a pressure-resistant reactor, heated to 110°C, and dehydrated under vacuum. After that, the reactor was purged with nitrogen and then the temperature was lowered to 80°C, and TDI-80 and dibutyltin dilaurate (DBTDL) were added thereto and reacted for 7 hours. After confirming that the NCO content reached 1.18 by a titration method, the resulting product was cooled to room temperature to obtain a prepolymer having a urethane bond.

The molar ratio of the total number of isocyanate groups of TDI with respect to the total number of hydroxyl groups of the precursor polymer B1 used (NCO/OH) is 2.

Subsequently, in accordance with Example 3 described in Japanese Unexamined Patent Application, First Publication No. Hei 11-100427, the prepolymer was cooled to 50°C and mixed at a ratio (parts by mass) of 2EHA:KBM602 = 184:206. 25 parts by mass of the mixture kept at 60°C for 5 days was added and reacted at 50°C for 1 hour under a nitrogen atmosphere. After confirming that the isocyanate peak had disappeared with a Fourier transform infrared spectrophotometer, the resulting product was cooled to room temperature to obtain a polymer A'1. A curable composition was produced by mixing 100 parts by mass of the polymer A'1 and the additive 1 shown in Table 3. Since the obtained curable composition had high viscosity and poor workability, no further investigation was conducted.

### (Example 11: production of polymer A'8 (Comparative Example) and curable composition)

A polymer A'8 was obtained in the same manner as in Example 10 with the exception that the precursor polymer B1 in Example 10 was changed to the precursor polymer B8 having the same mass.

A curable composition was produced by mixing 100 parts by mass of the polymer A'8 and the additive 1 shown in Table 3.

### (Examples 12 to 14: production of polymers A'9 to A'11 (Comparative Examples) and curable compositions)

Mixtures containing any one of polymers A'9 to A'11 were obtained in the same manner as in Example 1 with the exception that the precursor polymer B1 in Example 1 was changed to any one of the precursor polymers B'9 to B'11 having the same mass.

The polymer A'10 obtained in Example 13 was solid at 25°C, and it was impossible to measure the viscosity. Therefore, no further investigation was conducted.

In Examples 12 and 14, curable compositions were produced by mixing 100 parts by mass of the respective mixture containing either the polymer A'9 or A'11 and the additive 1 shown in Table 3, respectively.

### (Example 15: production of polymer A16 and curable composition)

A mixture containing a polymer A16 and a curable composition were produced in the same manner as in Example 1 with the exception that the precursor polymer B1 in Example 1 was changed to the precursor polymer B12 having the same mass.

### <Other components>

The additives listed in Table 3 are as follows.
WHITON SB: product name of heavy calcium carbonate manufactured by Shiraishi Kogyo Kaisha, Ltd.
CCR: HAKUENKA CCR, product name of colloidal calcium carbonate manufactured by Shiraishi Kogyo Kaisha, Ltd.
R-820: product name of titanium oxide manufactured by Ishihara Sangyo Kaisha, Ltd.
Balloon 81GCA: product name of organic balloon manufactured by Matsumoto Yushi-Seiyaku Co., Ltd.
Printex 30: product name of carbon black manufactured by Orion Engineered Carbons.
CML35: product name of calcium oxide manufactured by Shiraishi Kogyo Kaisha, Ltd.
DINP: diisononyl phthalate.
UP-1171: ARUFON UP-1171, product name of an acrylic polymer with an Mw of 3,000 manufactured by Toagosei Co., Ltd.
Polymer C1: polypropylene glycol (not including EO) with an Mn of 10,000.
DINCH: 1,2-cyclohexane dicarboxylic acid-diisononyl ester.
Polymer B1: precursor polymer B1 obtained in Production Example 1.
SANSO CIZER EPS: product name of 4,5-epoxycyclohexane-1,2-dicarboxylic acid-di-2-ethylhexyl manufactured by New Japan Chemical Co., Ltd.
DISPARLON 6500: product name of a hydrogenated castor oil-based thixotropic agent manufactured by Kusumoto Chemicals, Ltd.
IRGANOX 1010: product name of a hindered phenolic antioxidant manufactured by BASF Corporation.
TINUVIN 326: product name of a benzotriazole-based ultraviolet absorber manufactured by BASF Corporation.
TINUVIN 765: product name of a tertiary amine-containing hindered amine-based light stabilizer manufactured by BASF Corporation.
LA-63P: ADK STAB LA-63P, product name of ADEKA Corporation.
KBM-1003: product name of vinyltrimethoxysilane manufactured by Shin-Etsu Chemical Co., Ltd.
KBM-403: product name of 3-glycidyloxypropyltrimethoxysilane manufactured by Shin-Etsu Chemical Co., Ltd.
KBM-603: product name of 3-(2-aminoethylamino)propyltrimethoxysilane manufactured by Shin-Etsu Chemical Co., Ltd.
Laurylamine: a reagent manufactured by Junsei Chemical Co., Ltd.
FARMIN CS: product name of a coconut amine manufactured by Kao Corporation.
DEAPA: 3-diethylaminopropylamine manufactured by Tokyo Chemical Industry Co., Ltd.
TMP-3TMS: a tris-trimethylsilyl form of trimethylolpropane.
Tung oil: an air oxidizable curable compound manufactured by Kimura Corporation.
M-309: ARONIX M-309, product name of Toagosei Co., Ltd.
U-810: product name of a dioctyltin catalyst manufactured by Nitto Kasei Co., Ltd.
U-220H: product name of a dibutyltin catalyst manufactured by Nitto Kasei Co., Ltd.
DBTDL: dibutyltin dilaurate manufactured by Tokyo Chemical Industry Co., Ltd.
TC750: ORGATIX TC750, product name of titanium diisopropoxybis(ethyl acetoacetate) manufactured by Matsumoto Fine Chemical Co., Ltd.
Neodecanoic acid: manufactured by Strem Chemicals, Inc.
Catalyst composition: a composition obtained by mixing 4 parts by mass of a mixture obtained by mixing STANOCT (product name of stannous octoate manufactured by Yoshitomi Pharmaceutical Industries, Ltd.) and laurylamine (reagent manufactured by Junsei Chemical Co., Ltd.) in a mass ratio of 6:1, 6 parts by mass of SANSO CIZER DINP (product name of diisononyl phthalate manufactured by New Japan Chemical Co., Ltd.), 15 parts by mass of WHITON SB (product name of heavy calcium carbonate manufactured by Shiraishi Calcium Kaisha, Ltd.) and 5 parts by mass of Glomax LL (product name of calcined kaolin manufactured by Takehara Kagaku Kogyo Co., Ltd.).

**[Table 2]**

| | Precursor polymer B | Oxyalkylene polymer A | Number of groups per molecule | | Mn | Nw/Mn | EO content | Viscosity |
|---|---|---|---|---|---|---|---|---|
| | | | Reactive silicon group | -C(=O)NH- | | | [% by mass] | [Pas] |
| Example 1 | B1 | A1 | 2.9 | 2.9 | 13,000 | 1.41 | 12 | 5.0 |
| Example 2 | B2 | A2-1 | 2.9 | 2.9 | 13,000 | 1.18 | 20 | 4.3 |
| Example 3 | B2 | A2-2 | 2.9 | 2.9 | 13,000 | 1.19 | 20 | 4.3 |
| Example 4 | B2 | A2-3 | 2.9 | 2.9 | 13,000 | 1.18 | 20 | 4.3 |
| Example 5 | B3 | A3 | 2.9 | 2.9 | 13,000 | 1.18 | 65 | 7.6 |
| Example 6 | B4 | A4 | 2.9 | 2.9 | 13,000 | 1.18 | 80 | 10.3 |
| Example 7 | B5 | A5 | 1.9 | 1.9 | 14,000 | 1.16 | 20 | 6.9 |
| Example 8 | B6 | A6 | 2.9 | 2.9 | 23,000 | 1.20 | 20 | 14.5 |
| Example 9 | B7 | A7 | 2.9 | 2.9 | 9,000 | 1.18 | 20 | 2.9 |
| Example 10 | B1 | A'1 | 2.9 | 5.8 | 39,000 | 8..19 | 12 | 131.0 |
| Example 11 | B8 | A'8 | 2.9 | 5.8 | 15,000 | 3.48 | 20 | 25.3 |
| Example 12 | B'9 | A'9 | 2.9 | 2.9 | 13,000 | 1.24 | 0 | 3.0 |
| Example 13 | B'10 | A'10 | 2.9 | 2.9 | 13,000 | 1.18 | 100 | - |
| Example 14 | B'11 | A'11 | 2.9 | 2.9 | 2,900 | 1.16 | 20 | 0.2 |
| Example 15 | B12 | A16 | 4.4 | 4.4 | 57,720 | 1.17 | 5 | - |

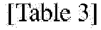

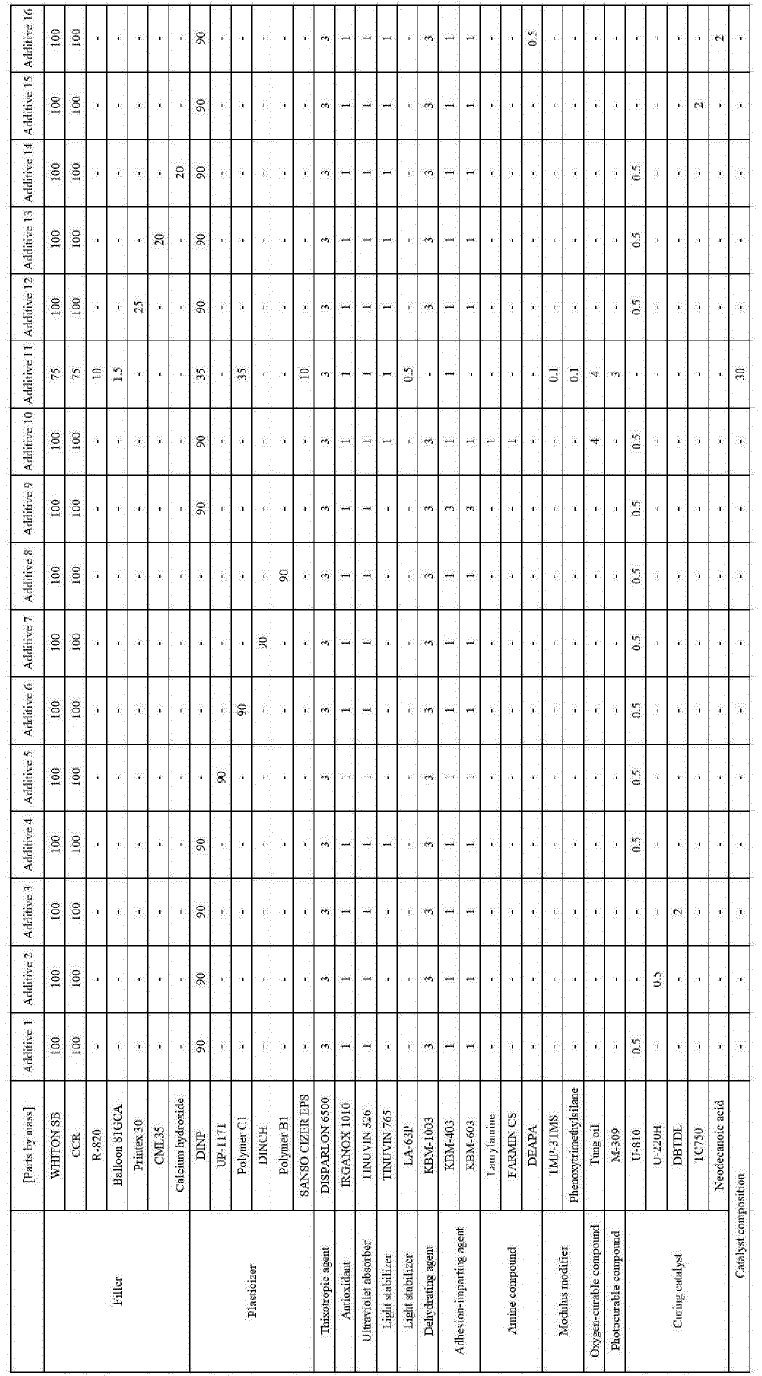

**[Table 4]**

| | Precursor polymer B | Curable composition | | | Deep-part curability [mm] | | | Physical properties of cured product | | |
|---|---|---|---|---|---|---|---|---|---|---|
| | | Oxyalkylene polymer A | Additive (Table 3) | Viscosity [Pa·s] | After 1 day | After 3 days | After 7 days | M50 [N/mm²] | Tmax [N/mm²] | E [%] |
| Example 1-1 | B1 | A1 | 1 | 108.0 | 4.5 | 7.5 | 13.0 | 1.01 | 1.16 | 80 |
| Example 1-2 | B1 | A1 | 8 | 117.2 | 4.5 | 10.0 | 20.0 | 0.93 | 1.11 | 93 |
| Example 2 | B2 | A2-1 | 1 | 104.2 | 4.5 | 8.0 | 13.5 | 1.00 | 1.15 | 83 |
| Example 3 | B2 | A2-2 | 2 | 109.3 | 4.5 | 17.0 | 24.0 | 0.86 | 1.11 | 120 |
| Example 4 | B2 | A2-3 | 1 | 103.1 | 7.0 | 20.5 | 32.5 | 1.03 | 1.13 | 78 |
| Example 5 | B3 | A3 | 1 | 104.7 | 7.0 | 55.0 | - | 1.05 | 1.11 | 73 |
| Example 6 | B4 | A4 | 1 | 109.4 | 6.5 | 55.0 | - | 1.08 | 1.10 | 70 |
| Example 7 | B3 | A5 | 1 | 134.0 | 5.0 | 9.0 | 14.5 | 0.68 | 1.26 | 130 |
| Example 8 | B6 | A6 | 1 | 165.4 | 4.5 | 7.5 | 12.0 | 0.62 | 1.29 | 149 |
| Example 9 | B7 | A7 | 1 | 101.0 | 4.0 | 8.0 | 12.0 | 1.35 | 1.44 | 60 |
| Example 10 | B1 | A'1 | 1 | - | - | - | - | - | - | - |
| Example 11 | B'8 | A'8 | 1 | 257.6 | 4.5 | 8.0 | 13.0 | 1.00 | 1.09 | 83 |
| Example 12 | B'9 | A'9 | 1 | 103.6 | 3.0 | 6.0 | 10.0 | 1.18 | 1.33 | 71 |
| Example 13 | B'10 | A'10 | - | - | - | - | - | - | - | - |
| Example 14 | B'11 | A'11 | 1 | 98.0 | 4.5 | 8.5 | 12.5 | - | 1.66 | 10 |
| Example 15 | B 12 | A16 | 1 | 36.0 | 10.0 | 11.0 | 16.0 | 0.77 | 1.1 | 154 |

The curable compositions of Examples 1-1, 1-2, 2 to 9, and 15 had low viscosity, favorable workability, and excellent deep-part curability, and the cured products were excellent in strength and elongation having high values of Tmax and E.

In Examples 1-1, 1-2, 2 to 9 and 15, the additives can be changed to additives 1 to 16 shown in Table 3, and similar effects can be obtained.

### (Reference Example 1: production of polymer A12)

The air inside the reactor containing the precursor polymer B1 was replaced with nitrogen gas, 3-isocyanatopropyltrimethoxysilane was added so that a ratio of NCO/OH (molar ratio) was 0.97 while maintaining the internal temperature at 50°C, and bismuth octoate (Nikka Octhix-bismuth 25%: manufactured by Nihon Kagaku Sangyo Co., Ltd.) was added as a catalyst. Then, the temperature was raised to 80°C, and the resulting mixture was stirred while the temperature was kept at 80°C. The amount of the catalyst added was 0.0010 parts by mass with respect to the precursor polymer B1 (100 parts by mass). After confirming that the isocyanate peak had disappeared with a Fourier transform infrared spectrophotometer 5 hours later, the resulting product was cooled to room temperature to obtain a polymer A12.

### (Reference Example 2: production of polymer A13)

A polymer A13 was obtained in the same manner as in Reference Example 1 with the exception that the precursor polymer B1 was changed to the precursor polymer B'9 having the same mass, and the amount of bismuth octoate (Nikka Octhix-bismuth 25%: manufactured by Nihon Kagaku Sangyo Co., Ltd.) added as a catalyst was changed to 0.0025 parts by mass with respect to the precursor polymer B'9 (100 parts by mass). It should be noted that 5 hours later, it was confirmed with a Fourier transform infrared spectrophotometer that the isocyanate peak had disappeared in the same manner as for the polymer A12.

### (Storage stability)

The polymer A12 and polymer A13 obtained in Reference Examples 1 and 2 were allowed to stand at 70°C for 7 days, and the rate of increase in viscosity after standing with respect to the viscosity before standing (thickening rate) was measured. The thickening rate is an indicator of storage stability, and the lower the thickening rate, the better the storage stability of the polymer, and the storage stability is favorable when the thickening rate is 200% or less. The thickening rate of the polymer A12 obtained in Reference Example 1 was 36%, and the thickening rate of the polymer A13 obtained in Reference Example 2 was 700%. The polymer A13 had a higher thickening rate and poorer storage stability than those of the polymer A12.

### (Reference Example 3: production of polymer A14)

A polymer A14 was obtained in the same manner as in Reference Example 1 with the exception that the amount of bismuth octoate (Nikka Octhix-bismuth 25%: manufactured by Nihon Kagaku Sangyo Co., Ltd.) added as a catalyst in Reference Example 1 was changed to 0.0050 parts by mass with respect to the precursor polymer B1 (100 parts by mass).

### (Reference Example 4: production of polymer A15)

A polymer A15 was obtained in the same manner as in Reference Example 2 with the exception that the amount of bismuth octoate (Nikka Octhix-bismuth 25%: manufactured by Nihon Kagaku Sangyo Co., Ltd.) added as a catalyst in Reference Example 2 was changed to 0.0050 parts by mass with respect to the precursor polymer B'9 (100 parts by mass).

### (Reaction time)

In Reference Examples 3 and 4, the time from the addition of the catalyst until the confirmation of the end of the reaction between the hydroxy group and the isocyanate group was defined as the reaction time, which was 30 minutes in Reference Example 3 and 60 minutes in Reference Example 4. When the same amount of catalyst was added to the precursor polymer B1 or the precursor polymer B'9, the reaction between the hydroxy group and the isocyanate group proceeded more rapidly in the precursor polymer B1 than in the precursor polymer B'9.

## Claims

1. An oxyalkylene polymer comprising:
a polyoxyalkylene chain containing an oxyethylene group; and
a reactive silicon group which is represented by the following formula (1) and bonded to the polyoxyalkylene chain via an organic group containing one group represented by the following formula (i),
wherein a number average molecular weight is from 3,000 to 150,000, a molecular weight distribution is 2.00 or less, an amount of the oxyethylene group is from 3 to 90% by mass, and the number of the reactive silicon groups per molecule is 0.5 or more,
-C(=O)NH- (i)
-SiXₐR₃₋ₐ (1)
wherein R is a monovalent organic group having 1 to 20 carbon atoms and represents an organic group other than a hydrolyzable group; X represents a hydroxyl group, a halogen atom, or a hydrolyzable group; a represents an integer of 1 to 3; when a is 1, R may be the same as or different from each other; and when a is 2 or 3, X may be the same as or different from each other.

2. The oxyalkylene polymer according to Claim 1, which does not contain a urea bond.

3. A curable composition comprising the oxyalkylene polymer according to Claim 1 or 2.

4. The curable composition according to Claim 3,
wherein an amount of the oxyalkylene polymer is from 5 to 90% by mass with respect to a total mass of the curable composition.

5. The curable composition according to Claim 3 or 4, further comprising a plasticizer.

6. The curable composition according to Claim 5,
wherein an amount of the plasticizer is from 1 to 350 parts by mass with respect to 100 parts by mass of the oxyalkylene polymer.

7. The curable composition according to any one of Claims 3 to 6, which is used for a sealing material or an adhesive.

8. A cured product of the curable composition according to any one of Claims 3 to 7.

9. A method for producing an oxyalkylene polymer,
the method comprising
reacting a precursor polymer which includes a polyoxyalkylene chain containing an oxyethylene group, and an active hydrogen-containing group bonded to the polyoxyalkylene chain, and has a number average molecular weight of 3,000 to 150,000, a molecular weight distribution of 2.00 or less and an amount of the oxyethylene group of 3 to 90% by mass,
with a compound represented by the following formula (2), so that the number of reactive silicon groups represented by the following formula (1) per molecule is 0.5 or more, to obtain an oxyalkylene polymer,
-SiXₐR₃₋ₐ (1)
wherein R is a monovalent organic group having 1 to 20 carbon atoms and represents an organic group other than a hydrolyzable group; X represents a hydroxyl group, a halogen atom, or a hydrolyzable group; a represents an integer of 1 to 3; when a is 1, R may be the same as or different from each other; and when a is 2 or 3, X may be the same as or different from each other,
O=C=N-Q¹-SiXₐR₃₋ₐ (2)
wherein Q¹ is a divalent organic group having 1 to 20 carbon atoms, and R, X, and a are the same as those defined in the formula (1).

10. The production method according to Claim 9, wherein a total degree of unsaturation of the precursor polymer is 0.1 meq/g or less.

11. The production method according to Claim 9 or 10,
wherein the precursor polymer is produced by polymerizing a cyclic ether containing ethylene oxide with an initiator in the presence of a double metal cyanide complex.

12. The production method according to Claim 9 or 10,
wherein the precursor polymer is produced by polymerizing a cyclic ether with an initiator in the presence of a double metal cyanide complex, and further polymerizing ethylene oxide in the presence of an alkali metal hydroxide.
